# EUROPÄISCHE PATENTANMELDUNG

(11) **EP 0 953 620 A1**
(43) Veröffentlichungstag der Anmeldung: **03.11.1999**
(21) Anmeldenummer: 99107260.4
(22) Anmeldetag: 14.04.1999
(51) Int. Cl.: C09J 7/02, C09J 7/04

(54) **Malerabdeckband und seine Verwendung**

(30) Priorität: 29.04.1998 DE 19819108
(71) Anmelder: Beiersdorf Aktiengesellschaft, 20245 Hamburg (DE)
(72) Erfinder: Zimmermann, Dieter, 21635 Jork (DE)

(57) **Zusammenfassung**

Verwendung einer durch Ziehen in Richtung der Verklebungsebene lösbaren Klebfolie,
a) deren selbstklebende Klebmasse auf Basis von thermoplastischem Kautschuk und klebrigmachenden Harzen besteht, wobei die Klebfolie hohe Elastizität und geringe Plastizität aufweist, die Adhäsion geringer als die Kohäsion ist, das Haftvermögen beim Dehnen der Folie weitgehend verschwindet und das Verhältnis von Abzugskraft zu Reißlast 1 : 1,5 oder größer ist, die
b) einseitig auf die Klebmasse ein dehnbares Vlies aufkaschiert trägt,
als rückstandsfrei und beschädigungslos durch Ziehen wieder entfembares Malerabdeckband.

## Beschreibung

Die Erfindung betrifft die Verwendung einer durch Ziehen in Richtung der Verklebungsebene lösbaren Klebfolie als Malerabdeckband, sowie ein solches Malerabdeckband.

Malerabdeckbänder sind bekannt, im Handel erhältlich und werden verbreitet von Profis und Laien verwendet. Meist handelt es sich dabei um Selbstklebebänder mit Papierträger, wobei auch gekreppte oder sonstwie vorbehandelte Papierträger eingesetzt werden. Probleme ergeben sich mit solchen Bändern insbesondere beim späteren Wiederablösen und auch beim verkleben in Kurven, wobei es durch Spannungen im Material zu teilweisen Abheben und Unterlaufen von Farbe, Lack oder dergleichen kommt.

Es sind aber auch schon stripfähige Klebebänder bekannt, die durch Ziehen in Richtung der Verklebungsebene beschädigungslos wieder abgezogen werden können. Derartige doppelseitige Klebfolien sind als 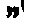 tesa Power Strips® im Handel. Beschrieben werden derartige Produkte in ***US 4,024,312, DE 33 31 016 C2, DE 37 14 453 C1, WO 92/11332, US 5,516, 581, US 5,672,402, DE 42 22 849 C1, WO 95/06691; DE 44 28 587 C2, DE 44 31 914 A1, WO 97/07172, EP 761.793 A2*** und ***DE 197 08 366*****.** Allgemein liegt das Schwergewicht der dort beschriebenen Produkte auf doppelseitig klebenden sogenannten Fixen, zum Verkleben zweier Substrate.

Es ist aber auch schon die Anwendung von derartigen stripfähigen Klebebändem zum Abdecken vorgeschlagen worden. So heißt es in US 5,516,581 Sp. 2, Z. 46 ff., daß zwar die Hauptanwendung auf dem Gebiet 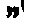 mounting" und 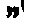 joining" liege, daß aber auch 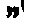 labeling" und 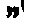 masking" in Betracht kämen, wobei allerdings der Produktaufbau mit einem hoch dehnbaren Folienträger (Sp. 3, Z. 40 ff) nachteilig ist, sowohl hinsichtlich Kosten, Herstellung und Einsatz z.B. als Malerabdeckband.

Aufgabe der Erfindung war es, hier Abhilfe zu schaffen, insbesondere ein preiswertes, unkompliziertes und für die Praxis geeignetes Malerabdeckband zu schaffen, das gleichwohl rückstandsfrei und beschädigungslos nach erfolgtem Einsatz wieder abgestrippt werden kann.

Gelöst wird dies durch ein Band wie in den Ansprüchen näher gekennzeichnet.

Als Klebmasse ist insbesondere eine solche wie in DE 33 31 016 C2 beschrieben geeignet, wobei besonders auf das Beispiel verwiesen wird. Ein weiteres Beispiel ist wie folgt, insbes. als Einschichtextrudermasse geeignet:

| | | Einwaage: 1.000,000 kg |
|---|---|---|
| Firma Shell: | CARIFLEX TR 1101 | 230,000 kg |
| Firma Shell: | CARIFLEX TR 1107 S | 235,000 kg |
| Firma Hercules: | Pentalyn H | 500,000 kg |
| Firma Ciba: | STAB-IRGANOX 1010 | 5,000kg |
| Firma Ciba: | Weston 399 | 5,000 kg |
| Firma Ciba: | Chimasorb 944 | 5,000kg |
| Firma Kronos: | TITANDIOXID 21600 | 20,000 kg |

Nach Kompoundierung im Doppelschneckenextruder erfolgt die Beschichtung vorzugsweise mittels Breitschlitzdüse auf getrocknetem Trennpapier in einer Dicke von insbesondere 0,3 - 0,4 mm. Gleichzeitig wird mit einem ca. 20 g/m² dehnbaren Kunststoffspinnvlies eingedeckt.

Als Malerabdeckband eingesetzt trennt sich beim abschließenden Stripvorgang das mit Farbe verschmutzte Vlies von dem Träger, und es kann getrennt entsorgt werden.

Geeignete Vliese sind Spinnvliese, bestehend aus Polyester und Viskosefasern. Gewichte (g/m²), möglichst von 15 bis 30, insbesondere von 20 bis 25 g/m².

## Patentansprüche

1. Verwendung einer durch Ziehen in Richtung der Verklebungsebene lösbaren Klebfolie,
a) deren selbstklebende Klebmasse auf Basis von thermoplastischem Kautschuk und klebrigmachenden Harzen besteht, wobei die Klebfolie hohe Elastizität und geringe Plastizität aufweist, die Adhäsion geringer als die Kohäsion ist, das Haftvermögen beim Dehnen der Folie weitgehend verschwindet und das Verhältnis von Abzugskraft zu Reißlast 1 : 1,5 oder größer ist, die
b) einseitig auf die Klebmasse ein dehnbares Vlies aufkaschiert trägt,
als rückstandsfrei und beschädigungslos durch Ziehen wieder entfernbares Malerabdeckband.

2. Verwendung nach Anspruch 1 für Abdeckungen in Form von Rundungen.

3. Verwendung nach Anspruch 1, dadurch gekennzeichnet, daß die Klebmasse Antioxidantien, UV-Stabilisatoren, Farbstoffe, Füllstoffe und/oder andere übliche Hilfsmittel enthält.

4. Verwendung nach Anspruch 1, dadurch gekennzeichnet, daß die Klebfolie 0,3 - 0,4 mm dick ist.

5. Verwendung nach Anspruch 1, dadurch gekennzeichnet, daß das Vlies ein solches von 10 - 40, insbesondere 15 - 25 m² Gewicht ist, insbesondere ein Kunststoffvlies ist.

6. Malerabdeckband nach einem der Ansprüche 1 - 5.
